# EUROPÄISCHE PATENTSCHRIFT

(11) **EP 2 719 977 B1**
(45) Veröffentlichungstag und Bekanntmachung des Hinweises auf die Patenterteilung: **29.03.2017**
(21) Anmeldenummer: 13188189.8
(22) Anmeldetag: 10.10.2013
(51) Int. Cl.: F25D 17/02, F25B 30/06, F24D 19/10, F24D 11/00, F24D 11/02, G05B 15/02

(54) **VERSORGUNGSNETZ**
SUPPLY NETWORK
RÉSEAU D'APPROVISIONNEMENT

(30) Priorität: 11.10.2012 DE 202012103891 U
(43) Veröffentlichungstag der Anmeldung: 16.04.2014
(73) Patentinhaber: Schmid, Arnold, 77716 Haslach i.K. (DE)
(72) Erfinder: Arnold SCHMID, 77716 Haslach i. K. (DE); Dr. Edgar SCHMIEDER, 78046 Villingen (DE)
(74) Vertreter: Lemcke, Brommer & Partner Patentanwälte Partnerschaft mbB

(56) Entgegenhaltungen:
- CH-A5- 692 216
- DE-A1-102011 001 273

## Beschreibung

Die Erfindung betrifft ein Versorgungsnetz, an das eine Vielzahl von Teilnehmern anzuschließen ist, wobei die Teilnehmer einen unterschiedlichen Bedarf an Wärmestrom haben.

Aus der DE 10 2007 049 621 A1 ist ein Verfahren zur Versorgung von Wohn- und Gewerbeobjekten mit Wärme- und Kälteenergie mit dem System der kalten Nahewärme in Kombination mit Wärmepumpen, Speichern, Wärmeüberträgern, Wärmeerzeugern (z. B. mit einem Biomasse-BHKW), Absorptionskältemaschine und einem Versorgungsnetz bekannt. Die Wärmepumpen sind für den Betrieb mit Sole bzw. Wasser als Wärmeträger geeignet, sogenannte Sole/Wasser- bzw. Wasser/Wasser-Wärmepumpen. Die Wärmepumpen sind geeignet um bei Kälteenergiebedarf im Bypass betrieben zu werden. Das Versorgungsnetz, bestehend aus Vor- und Rücklaufleitungen aus Kunststoffrohren, wird in der Dimensionierung dem Bedarf angepasst. Jede Wärmepumpe wird aus dem Versorgungsnetz über eine Hausanschlussleitung eingebunden. Das Temperaturniveau des Versorgungsnetzes wird im Bereich von ca. 15 °C gehalten. Zur Aufrechterhaltung der Versorgungsnetztemperatur wird ein Wärm Blockheizkraftwerk eingesetzt. Der elektrische Strom kann in das öffentliche Netz bzw. für die Versorgung der Wärmepumpen eingesetzt werden. Die Abwärme wird über einen Pufferspeicher und Wärmeüberträger an das Versorgungsnetz abgegeben. Die überschüssige Wärmeenergie bei dem Betrieb des BHKW außerhalb der Heizperiode wird für den Betrieb einer Absorptionskältemaschine genutzt. Dieses Verfahren betrifft ein reines Verbrauchersystem, bei dem die Verbraucher die Wärme- oder Kälteenergie verbrauchen und nur die nach dem Verbrauch übrig bleibende Energie in das System zurückführen, wobei die Effizienz des Systems begrenzt ist.

Die DE 10 2011 001 273 A1 offenbart einen Speichertank mit einem Gehäuse mit einem Speichermedium und wenigstens einer ersten Wärmetauscheranordnung in Kontakt mit dem Speichermedium, wobei die wenigstens erste Wärmetauscheranordnung ein erstes Wärmeträgermedium aufweist. Eine elektrische Heizeinheit ist zum Aufheizen des Speichermediums vorgesehen ist. Das Speichermedium hat einen Phasenübergang mit latenter Wärme im Betriebsbereich des Speichertanks. Die Verbraucher eines mit dem Tank verbundenen Versorgungsnetzes erhalten einen zeitabhängigen und individuell unterschiedlichen Wärmestrom.

Ein Versorgungsnetz gemäß dem Oberbegriff des Anspruchs 1 ist aus der Patentschrift CH692 216 bekannt.

Es ist Aufgabe der Erfindung, ein Versorgungsnetz bereit zu stellen, bei dem die Energieausnutzung gegenüber herkömmlichen Systemen verbessert wird und das sehr flexible auf die Anforderungen der Teilnehmer und von Smart-Grid-Netzbetreibern reagieren kann.

Dazu ist das erfindungsgemäße Versorgungsnetz, an das eine Vielzahl von Teilnehmern anzuschließen ist, wobei die Teilnehmer einen unterschiedlichen Bedarf an Wärme- und Volumenstrom haben, dadurch gekennzeichnet, dass das Versorgungsnetz ein bidirektionales, kalt temperiertes Fluid-Kälte-Wärme-Netz ist, dass bidirektionale Teilnehmer-Schnittstellen bei den Teilnehmern und Zusatzgeräte-Schnittstellen für an das Netz angeschlossene Zusatzgeräte mit Energieverbrauchs- oder Energiezufuhreigenschaften vorgesehen sind, wobei die bidirektionalen Teilnehmer-Schnittstellen je einen Anschluss für thermischen Fluid-Energietransfer aufweisen, wobei es sich um einen Kältetransfer oder einen Wärmetransfer handeln kann, dass das Netz ein Kälte-Wärme-Bussystem mit Busanschlüssen für den Anschluss der Teilnehmer-Schnittstellen zu den Teilnehmern und der Zusatzgeräte-Schnittstellen an die Zusatzgeräte ist, dass ein Hauptspeicher mit einer bidirektionalen Hauptspeicher-Schnittstelle zum Netz vorgesehen ist, an den direkt diverse externe Energiequellen angeschlossen sind, dass das Netz Sensoren zur Erfassung von Energie-Daten an den Schnittstellen und den angeschlossenen Geräten sowie Datenschnittstellen zur Weitergabe der Energie-Daten aufweist umfasst; und dass eine Zentralsteuerung zur Steuerung der bidirektionalen Schnittstellen und Geräte bei den Teilnehmern und an dem Hauptspeicher vorgesehen ist.

Dadurch, dass es sich bei dem erfindungsgemäßen Versorgungsnetz um ein bidirektionelles, kalt temperiertes Fluid-Kälte-Wärme-Netz handelt, wobei die bidirektionellen Schnittstellen bei den Teilnehmern und an das Netz angeschlossenen Geräten mit Energieverbrauchs- oder Energiezuführeigenschaften vorgesehen sind, können die Teilnehmer, d.h. sowohl Verbraucher (Energie senke) als auch Lieferanten von Energie (Energiequelle) sowohl Energie von dem Netz erhalten als auch Energie an das Netz abgeben, die über das Maß der jeweils empfangenen Energie hinaus geht. Die kalte Temperierung des Fluids im Versorgungsnetz reduziert die Wärmeverluste an die Umgebung auf ein Minimum bzw. bei Temperaturen im Versorgungsnetz unter 10° C wird sogar Wärme von der Umgebung an das Versorgungsnetz abgegeben. Das Kälte-Wärme-Bus-System ermöglicht dabei die Zufuhr und die Ableitung des Fluids zu den Teilnehmern in einer steuerbaren Weise, wobei der Hauptspeicher dazu dient, den Energiebedarf dann zu decken, wenn die als Energiequelle wirkenden Teilnehmer nicht genügend Energie in das Netz einspeisen können. Das Vorhandensein des Hauptspeichers ist insbesondere dann wichtig, wenn zu Zwecken der Smard-Grid-Regulierung die energieverbrauchenden Wärmepumpen bei den Teilnehmern alle einschalten, um die individuellen Heißwasser- und Heizungsspeicher aufzuheizen, sobald das Stromnetz Überangebot an elektrischer Energie hat. Damit das Versorgungsnetz voll automatisch geregelt kann und sowohl die Entnahme von Energie als auch die Zulieferung von Energie erfasst werden kann, sind die Sensoren zur Erfassung von Energiedaten und die Datenschnittstellen vorgesehen, die es ermöglichen, dass die Zentralsteuerung die bi-direktionalen Schnittstellen und Geräte bei den Teilnehmern und den Hauptspeicher steuert.

Die bidirektionale Schnittstelle ermöglicht in vorteilhafter Weise eine Wärmeaufnahme, wenn Wärmebedarf am Teilnehmer vorhanden ist, und Wärmeabgabe, wenn Wärmeüberschuss am Teilnehmer vorhanden ist. Das heißt, Teilnehmer können abhängig von der Tageszeit und Jahreszeit und Wetter sowie Verbrauchsanforderungen entweder Wärmequellen sein oder auch Wärmesenken. Über die Schnittstelle fließt entweder ein positiver oder negativer Wärmestrom. Das Wärmeträgermedium im Netz dient je nach Schnittstellenbelastung als Wärmequelle und wird abgekühlt oder als Wärmesenke und wird aufgewärmt. Dabei können sich die im Netz nebeneinander an unterschiedlichen Orten befindlichen Schnittstellen unterschiedlich verhalten.

Eine besonders vorteilhafte Ausführung des erfindungsgemäßen Versorgungsnetzes ist dadurch gekennzeichnet, dass das Netz auf eine Betriebstemperatur des Fluids von + 10°C bis + 15°C ausgelegt ist, wobei diese Temperatur für die Wärmepumpen bei den Teilnehmern sehr günstig ist. Eine weitere besonders vorteilhafte Ausführung des erfindungsgemäßen Versorgungsnetzes ist dadurch gekennzeichnet, dass das Netz auf eine Betriebstemperatur des Fluids von -10°C bis 0°C ausgelegt ist, wobei diese Temperatur für die Wärmeaufnahme aus der Umgebung und für die Wärmeaufnahme aus dem Hauptspeicher sehr günstig ist. Dabei ist ein frostgeschütztes Wärmeträgerfluid im Versorgungsnetz im Einsatz.

Erfindungsgemäß ist vorgesehen, dass die Anlage zwischen den beiden Ausführungen bzw. Betriebszuständen umschalten kann und bei Bedarf Mischzustände regeln kann.

Eine weitere vorteilhafte Ausführung des erfindungsgemäßen Versorgungsnetzes ist dadurch gekennzeichnet, dass die Teilnehmer-Schnittstellen in Gebäude der Teilnehmer integriert sind, wobei das Netz zu den Gebäuden führt, oder dass die Teilnehmer-Schnittstellen in das Netz integriert sind, wobei Leitungen von den Schnittstellen zu Gebäuden der Teilnehmer führen. Das Versorgungsnetz kann dadurch in vorteilhafter Weise an lokale Gegebenheiten bei den Teilnehmern angepasst werden.

Eine weitere vorteilhafte Ausführung des erfindungsgemäßen Versorgungsnetzes ist dadurch gekennzeichnet, dass die Teilnehmer-Schnittstellen bzw. die Anschlüsse zu den Teilnehmern und den angeschlossenen Geräten und die Leitungen, die zu unterschiedlichen Teilnehmern und Geräten führen, genormt, vorzugsweise einheitlich ausgeführt sind. Da die Anschlüsse aller Verbraucher und Quellen im Netz einheitlich gestaltet sind, insbesondere bezüglich Durchmesser, Abmessungen und räumliche Anordnungen, ergibt sich eine erhebliche Vereinfachung der Installation und eine entsprechende Kostenersparnis. Außerdem hat dies den Vorteil, dass das Netz ohne Probleme jederzeit erweitert werden kann oder Verbraucher ausgetauscht werden können. Die Einheitlichkeit ist auch vorteilhaft, um die Schnittstellen zentral ansteuern zu können.

Eine weitere vorteilhafte Ausführung des erfindungsgemäßen Versorgungsnetzes ist dadurch gekennzeichnet, dass die bei den Teilnehmern an das Netz angeschlossenen Geräte eine Kühlanlage und/oder eine Wärmepumpe und/oder ein solarthermischer Dachkollektor und/oder ein Hybridkollektor umfassen. Dies sind vorteilhafte Beispiele für Wärmequellen bzw. Wärmesenken. Es können jedoch auch weitere Wärmequellen oder Wärmesenken integriert werden.

Eine weitere vorteilhafte Ausführung des erfindungsgemäßen Versorgungsnetzes ist dadurch gekennzeichnet, dass der Hauptspeicher ein vereisbarer Speicher ist, der mit einem vereisbaren Medium gefüllt ist, insbesondere mit Wasser. Das Speichersystem mit direkten Wärmequellen erlaubt die Kalt-Temperierung des Kälte-Wärme-Netzes. Die Einspeisung von Wärme aus externen Quellen direkt in den Speicher hat den Vorteil, dass die Umlauftemperatur auch bei starker Wärmezufuhr temperiert bei z.B. 10 Grad bleiben kann. Die extern zugeführte Wärme wirkt zunächst nur im Speicher selbst und taut dort gespeichertes Eis auf, ohne dass sich die Temperatur sofort stark erhöht.

Eine weitere vorteilhafte Ausführung des erfindungsgemäßen Versorgungsnetzes ist dadurch gekennzeichnet, dass der Hauptspeicher Hauptspeicher-Schnittstellen zum direkten Anschluss beispielsweise an ein Heizkraftwerk und/oder eine photovoltaische Solaranlage und/oder eine Solarthermieanlage und/oder eine Windkraftanlage aufweist. Würde die Wärme aus den großen Wärmequellen in das Leitungsnetz eingespeist, würde die Temperatur des Fluids im Netz stark ansteigen, Wärmeverluste würden auftreten und die Kühlfunktion würde zusammenbrechen. Insbesondere würden Kühlanlagen der Teilnehmer nicht mehr mit ausreichend kaltem sondern mit zu warmem Fluid versorgt werden.

Eine weitere vorteilhafte Ausführung des erfindungsgemäßen Versorgungsnetzes ist dadurch gekennzeichnet, dass die direkten Hauptspeicher-Schnittstellen am Hauptspeicher Leistungsanschlüsse sind, wobei in vorteilhafter Weise ermöglicht wird, dass der Hauptspeicher bei Bedarf schnell aufgeheizt werden kann, (Netz-Spitzen-Last Management, Smart-Grid-Minutenreserve, ohne dabei das Netz direkt zu beeinflussen. Eine schnelle Aufheizung kann dann erforderlich sein, wenn eine oder mehrere Energiequellen oder -senken ausfallen. Um dem Hauptspeicher wieder Wärme zuzuführen, müssen die Leistungsanschlüsse direkt in den Hauptspeicher erfolgen. Dadurch wird in vorteilhafter Weise erreicht, dass die Temperatur des Fluids im Netz nicht zu hoch wird und jegliche Kühlfunktion bei den Teilnehmern versagt. Somit wird die Kälteversorgung der direkt angeschlossenen Kälteverbraucher sichergestellt. Des Weiteren hat der Hauptspeicher die Funktion eines thermischen Energiereservoirs für den Fall, dass aus Gründen des Wärmebedarfs bei den Teilnehmern oder des Energieüberschusses im Elektrizitätsnetz die Wärmepumpen viel Wärme aus dem Versorgungsnetz entnehmen und auf höheres Temperaturniveau transferieren. Diese Funktionalität ist von großer Bedeutung als Flexibilität im Sinne der Smart Grid Steuerung von Stromverbrauchern.

Eine weitere vorteilhafte Ausführung des erfindungsgemäßen Versorgungsnetzes ist dadurch gekennzeichnet, dass das Netz eine Parallelschaltung der Teilnehmer-Schnittstellen zu den Teilnehmern und der Zusatzgeräte-Schnittstellen zu den Geräten aufweist. Durch die Parallelschaltung wird in vorteilhafter Weise erreicht, dass die einzelnen Geräte bei den Teilnehmern oder auch direkt an das Netz angeschlossene Geräte unabhängig voneinander angesteuert werden können.

Eine weitere vorteilhafte Ausführung des erfindungsgemäßen Versorgungsnetzes ist dadurch gekennzeichnet, dass die an das Netz angeschlossenen Zusatzgeräte ein dezentrales Block-Heizkraftwerk und/oder eine Solarstromanlage und/oder eine Kühlanlage und/oder eine Wärmepumpe aufweist. Das erfindungsgemäße Versorgungsnetz ist in vorteilhafter Weise flexibel genug, um nicht nur Geräte in Häusern von Teilnehmern, sondern auch externe Geräte, wie Blockheizkraftwerke oder dergleichen zu integrieren. Es können auch weitere Energiequellen oder -senken integriert werden in das Netz.

Eine weitere vorteilhafte Ausführung des erfindungsgemäßen Versorgungsnetzes ist dadurch gekennzeichnet, dass zusätzlich eine Wärmetauscheranlage zur Temperierung des Fluids im Netz an das Netz angeschlossen ist. Die Wärmetauscheranlage ist in vorteilhafter Weise ein weiteres Mittel, um das Fluid im Netz in seiner Temperatur auszugleichen.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

Es zeigen:
- Fig. 1: ein Ausführungsbeispiel des erfindungsgemäßen Versorgungsnetzes, und
- Fig. 2: eine Detaildarstellung zu den bei dem erfindungsgemäßen Versorgungsnetz verwendeten Teilnehmer-Schnittstellen.

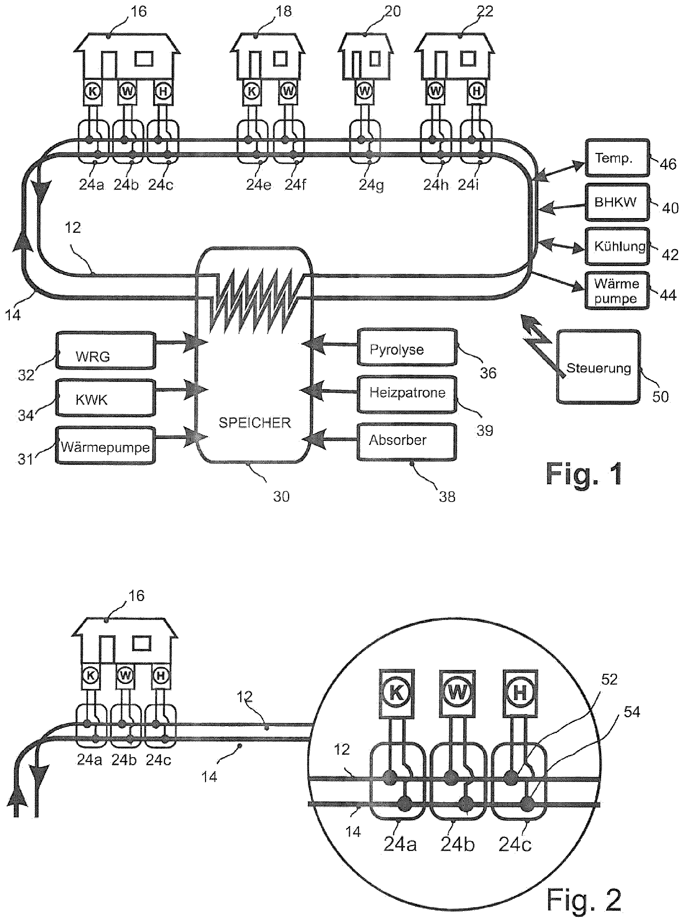

Wie aus Fig. 1 zu ersehen ist, umfasst das erfindungsgemäße Kälte-Wärme-Netz 10 zwei Ring-Fluidleitungen 12, 14, in denen das Fluid unter Beibehaltung der gewählten Temperatur von ca. -10 °C - +10 °C, vorzugsweise von ca. 0 -10° C, umgewälzt wird. Zwischen den Fluidleitungen 12,14 und Geräten H, K, W von Teilnehmern 16, 18, 20, 22 sind einheitliche Teilnehmer-Schnittstellen 24 a bis 24 i vorgesehen, die die Verbindung zwischen den Fluidleitungen 12, 14 und den bei den Teilnehmern 16 bis 22 vorhandenen Geräten H, K, W herstellen. Ein Hauptspeicher 30 ist vorgesehen, um im Bedarfsfall große Energiemengen bereitzustellen.

Der Hauptspeicher 30 ist mit großen zentralen Energiequellen, beispielsweise eine Wärmepumpe 31, einem Wärmerückgewinnungs-Kanal 32, einer KWK-Einheit 34, ein Pyrolyse-Einrichtung 36, einem Solarluft- und Erdabsorber 38 und einer Heizpatrone 39 verbunden. Diese Geräte 32 bis 39 sind nur beispielhaft aufgeführt, es können selbstverständlich auch konventionelle Kraftwerke oder Windkraftwerke oder Wasserkraftwerke zur Energieversorgung eingesetzt werden.

Wenn dem Hauptspeicher 30, der als Eisspeicher ausgebildet ist, Energie zugeführt wird, wird die Temperatur des Hauptspeichermediums nicht erhöht, denn das Medium bleibt bei ca. 0° C bis das gesamte Eis geschmolzen ist. Somit kann weiterhin Wärme entnommen und die Temperatur des Fluids im Netz auf Kalttemperatur belassen werden. Im Gegensatz dazu würde, wenn die Wärme aus den großen Wärmequellen, nämlich den Geräten 32 bis 39, direkt in die Fluidleitungen 12, 14 eingespeist würde, würde die Temperatur des Mediums stark ansteigen, Wärmeverluste würden auftreten und die Kühlfunktion würde zusammenbrechen.

Die (nicht gezeigten) Geräte-Schnittstellen zwischen den Geräten 32 bis 39 und dem Hauptspeicher 30 sind sogenannte Leistungsschnittstellen, die eine schnelle Energieübertragung von den Geräten 32 bis 39 in den Hauptspeicher 30 gestatten.

Schließlich können auch Zusatzgeräte direkt an die Fluidleitungen 12, 14 angeschlossen werden, wie beispielsweise ein dezentrales Block-Heizkraftwerk 40, eine Kühlanlage 42, eine Wärmepumpe 44 und eine Temperierungseinrichtung 46. Auch diese Aufzählung ist nur beispielhaft, so können beispielsweise Sonnenkollektorsysteme und auch andere Wärmequellen und auch -senken direkt an die Fluidleitungen 12, 14 angeschlossen werden, wobei ein unterschiedlicher Wärme-/Kältebedarf jedenfalls durch die Wirkung des Hauptspeichers 30 ausgeglichen werden kann.

Aus Fig. 1 ist schließlich ersichtlich, dass die Teilnehmer-Schnittstellen 24 a bis 24 i, die Hauptspeicher-Schnittstelle zwischen dem Hauptspeicher 30 und der Fluidleitung 14 sowie die Geräte-Schnittstellen von den Geräten 32 bis 46 parallel geschaltet sind, wobei, was nicht gezeigt ist, die Geräte-Schnittstellen zwischen den Geräten 32 bis 46 und dem Hauptspeicher 30 mit den Fluidleitungen 12, 14 alle gleich ausgebildet sind.

Geräte, die bei den Teilnehmern 16 bis 22 vorhanden sind, sind mit "K" für Kältemaschine, "W" für Wärmepumpe und "H" für solarthermischer Dachkollektor bzw. Hybridkollektor (PVTh) bezeichnet. Es ist ersichtlich, dass die Teilnehmer 16 bis 22 mit unterschiedlichen Geräten K. W, H ausgerüstet sein können, wobei die einheitlichen Schnittstellen und Sensoren (nicht gezeigt) sowie Betriebsschalter (nicht gezeigt) an den Schnittstellen bzw. Geräten sowie Datenschnittstellen (nicht gezeigt) dafür sorgen, dass das Versorgungsnetz 10 durch eine zentrale Steueranlage 50 gesteuert werden kann, die beispielsweise über Funk mit den Datenschnittstellen in Verbindung steht.

Fig. 2 zeigt ein Detail der Teilnehmer-Schnittstellen 24 a bis 24 c des Teilnehmers 16. Dabei weist jede der Teilnehmer-Schnittstellen 24 a, 24 b, 24 c, zwei Anschlüsse 52, 54 auf, die an den Fluidleitungen 12, 14 angeschlossen sind. Es handelt sich somit um einheitliche Teilnehmer-Schnittstellen 24 in dem gesamten System.

## Patentansprüche

1. Versorgungsnetz (10) an das eine Vielzahl von Teilnehmern (16-22) angeschlossen sind, wobei die Teilnehmer (16-22) einen unterschiedlichen Bedarf an Wärme- und Volumenstrom haben, und das Versorgungsnetz (10) ein bidirektionales, kalt temperiertes Fluid-Kälte-Wärme-Netz ist, wobei bidirektionale Teilnehmer-Schnittstellen (24a-24i) bei den Teilnehmern (16-22) und Zusatzgeräte-Schnittstellen für an das Netz angeschlossene Zusatzgeräte (40-44) mit Energieverbrauchs- oder Energiezufuhreigenschaften vorgesehen sind, wobei die bidirektionalen Teilnehmer-Schnittstellen (24a-24i) je einen Anschluss für thermischen Fluid-Energietransfer aufweisen, wobei es sich um einen Kältetransfer oder einen Wärmetransfer handeln kann, wobei das Netz ein Kälte-Wärme-Bussystem mit Busanschlüssen für den Anschluss der Teilnehmer-Schnittstellen (24a-24i) zu den Teilnehmern (16-22) und der Zusatzgeräte-Schnittstellen an die Zusatzgeräte (40-44) ist, und ein Hauptspeicher (30) mit einer bidirektionalen Hauptspeicher-Schnittstelle zum Netz vorgesehen ist, wobei das Netz Sensoren zur Erfassung von Energie-Daten an allen Schnittstellen und an den angeschlossenen Geräten sowie Datenschnittstellen zur Weitergabe der Energie-Daten aufweist und eine Zentralsteuerung (50) zur Steuerung der bidirektionalen Schnittstellen und Geräte bei den Teilnehmern (16-22) vorgesehen ist,
**dadurch gekennzeichnet,**
**dass** an den Hauptspeicher (30) direkt diverse externe Energiequellen (32-38) angeschlossen sind
und
**dass** die Zentralsteuerung (50) auch zur Steuerung der bidirektionalen Schnittstellen an dem Hauptspeicher (30) vorgesehen ist.

2. Versorgungsnetz (10) nach Anspruch 1, **dadurch gekennzeichnet, dass** das Netz auf eine Betriebstemperatur des Fluids zwischen -10°C und +10°C ausgelegt ist.

3. Versorgungsnetz (10) nach Anspruch 2, **dadurch gekennzeichnet, dass** die Zentralsteue- rung ausgelegt ist, um zwischen unterschiedlichen Temperaturniveaus umschalten zu können

4. Versorgungsnetz (10) nach Anspruch 1 oder 2, **dadurch gekennzeichnet, dass** die Teilneh- mer-Schnittstellen (24a - 24i) in Gebäuden der Teilnehmer (16-22) integriert sind, wobei das Netz zu den Gebäuden führt.

5. Versorgungsnetz (10) nach Anspruch 1 oder 2, **dadurch gekennzeichnet, dass** die Teilneh- mer-Schnittstellen (24a - 24i) in das Netz integriert sind, wobei Leitungen von den Teilneh- mer-Schnittstellen (24a - 24i) zu Gebäuden der Teilnehmer (16-22) führen.

6. Versorgungsnetz (10) nach einem der Ansprüche 1 bis 5, **dadurch gekennzeichnet, dass** die Teilnehmer-Schnittstellen (24a - 24i) bzw. die Anschlüsse zu den Teilnehmern (16-22) und den angeschlossenen Geräten genormt, vorzugsweise einheitlich ausgeführt sind.

7. Versorgungsnetz (10) nach einem der Ansprüche 1 bis 6, **dadurch gekennzeichnet, dass** Leitungen, die Schnittstellen, an denen die unterschiedlichen Geräte bei den Teilnehmern (16- 22) anzuschließen sind, einheitlich geformt, genormt, vorzugsweise identisch ausgeführt sind.

8. Versorgungsnetz (10) nach Anspruch 1, **dadurch gekennzeichnet, dass** die die bei den Teil- nehmern (16-22) an das Netz angeschlossenen Geräte eine Kühlanlage und/oder eine Wär- mepumpe und/oder ein solarthermischer Dachkollektor und/oder ein Hybridkollektor umfas- sen.

9. Versorgungsnetz (10) nach Anspruch 1, **dadurch gekennzeichnet, dass** der Hauptspeicher (30) ein vereisbarer Hauptspeicher (30) ist, der mit einem vereisbaren Medium, insbesondere Wasser, gefüllt ist.

10. Versorgungsnetz (10) nach Anspruch 1 oder 9, **dadurch gekennzeichnet, dass** der Haupt- speicher (30) Hauptspeicher-Schnittstellen zum direkten Anschluss an eine Wärmepumpe (31) und/oder einen Wärmerückgewinnungs-Kanal (32) und/oder eine KWK-Einheit (34) und/oder eine Pyrolyse- Einrichtung (36) und/oder einen Solarluft- und Erdabsorber (38) und/oder eine Heizpatrone (39) aufweist.

11. Versorgungsnetz (10) nach Anspruch 10, **dadurch gekennzeichnet, dass** die direkten Hauptspeicher-Schnittstellen am Hauptspeicher (30) Leistungsanschlüsse sind, die ermöglichen, dass der Hauptspeicher (30) bei Bedarf schnell aufgeheizt werden kann.

12. Versorgungsnetz (10) nach Anspruch 1, **dadurch gekennzeichnet, dass** das Netz eine Parallelschaltung der Teilnehmer-Schnittstellen (24a - 24i) zu den Teilnehmern (16-22) und der Zusatzgeräte -Schnittstellen zu den Zusatzgeräten (40 - 44) aufweist.

13. Versorgungsnetz (10) nach Anspruch 1, **dadurch gekennzeichnet, dass** die an das Netz angeschlossenen Zusatzgeräte (40 - 44) ein dezentrales Block-Heizkraftwerk (40) und/oder eine Kühlanlage (42) und/oder eine Wärmepumpe (44) eine Solarstromanlage und/oder aufweist.

14. Versorgungsnetz (10) nach Anspruch 1 oder 13, **dadurch gekennzeichnet, dass** zusätzlich eine Wärmetauscheranlage (46) zur Temperierung des Fluids im Netz an das Netz angeschlossen ist.

## Claims

1. Supply network (10) to which a multiplicity of subscribers (16-22) are connected, wherein the subscribers (16-22) have different heat and volume flow requirements, and the supply network (10) is a bidirectional fluid cooling/heating network maintained at a cool temperature, wherein bidirectional subscriber interfaces (24a-24i) are provided at the subscribers (16 - 22) and auxiliary unit interfaces are provided for auxiliary units (40 - 44) which are connected to the network and have energy consumption or energy supply properties, wherein the bidirectional subscriber interfaces (24a-24i) each have a connection for thermal fluid/energy transfer, which transfer may be a cold transfer or a heat transfer, wherein the network is a cooling/heating bus system having bus connections for connection of the subscriber interfaces (24a - 24i) to the subscribers (16 - 22) and of the auxiliary unit interfaces to the auxiliary units (40 - 44), and a main storage device (30) having a bidirectional main storage device interface to the network is provided, wherein the network has sensors for acquiring energy data at all interfaces and at the connected units as well as data interfaces for forwarding the energy data, and a central controller (50) is provided for controlling the bidirectional interfaces and units at the subscribers (16 - 22),
**characterised in that**
various external energy sources (32 - 38) are directly connected to the main storage device (30) and
the central controller (50) is also provided for controlling the bidirectional interfaces at the main storage device (30).

2. Supply network (10) according to claim 1, **characterised in that** the network is designed for an operating temperature of the fluid of between -10°C and +10°C.

3. Supply network (10) according to claim 2, **characterised in that** the central controller is designed to be able to switch over between different temperature levels.

4. Supply network (10) according to claim 1 or 2, **characterised in that** the subscriber interfaces (24a - 24i) are integrated into buildings of the subscribers (16 - 22), wherein the network leads to the buildings.

5. Supply network (10) according to claim 1 or 2, **characterised in that** the subscriber interfaces (24a - 24i) are integrated into the network, wherein lines lead from the subscriber interfaces (24a-24i) to buildings of the subscribers (16 - 22).

6. Supply network (10) according to any one of claims 1 to 5, **characterised in that** the subscriber interfaces (24a - 24i) or the connections to the subscribers (16 - 22) and to the connected units are of standardised, preferably uniform, construction.

7. Supply network (10) according to any one of claims 1 to 6, **characterised in that** lines and the interfaces to which the different units are to be connected at the subscribers (16-22) are of uniformly configured, standardised, preferably identical, construction.

8. Supply network (10) according to claim 1, **characterised in that** the units connected to the network at the subscribers (16 - 22) comprise a cooling system and/or a heat pump and/or a solar thermal roof collector and/or a hybrid collector.

9. Supply network (10) according to claim 1, **characterised in that** the main storage device (30) is a freezable main storage device (30), which is filled with a freezable medium, especially water.

10. Supply network (10) according to claim 1 or 9, **characterised in that** the main storage device (30) has main storage device interfaces for direct connection to a heat pump (31) and/or a heat-recovery channel (32) and/or a CHP unit (34) and/or a pyrolysis device (36) and/or a solar air and ground absorber (38) and/or a heating cartridge (39).

11. Supply network (10) according to claim 10, **characterised in that** the direct main storage device interfaces at the main storage device (30) are power connections which enable the main storage device (30) to be heated quickly if required.

12. Supply network (10) according to claim 1, **characterised in that** the network has parallel connection of the subscriber interfaces (24a - 24i) to the subscribers (16 - 22) and of the auxiliary unit interfaces to the auxiliary units (40 - 44).

13. Supply network (10) according to claim 1, **characterised in that** the auxiliary units (40 - 44) connected to the network have a local modular CHP system (40) and/or a cooling system (42) and/or a heat pump (44) and/or a solar power system.

14. Supply network (10) according to claim 1 or 13, **characterised in that** a heat exchanger system (46) for controlling the temperature of the fluid in the network is additionally connected to the network.

## Revendications

1. Réseau d'approvisionnement (10) auquel une pluralité d'abonnés (16-22) sont raccordés, les abonnés (16-22) ayant des besoins différents en flux thermique et volumique, et le réseau d'approvisionnement (10) étant un réseau de chaleur et de froid à fluide bidirectionnel à basse température, des interfaces d'abonné bidirectionnelles (24a-24i) étant prévues chez les abonnés (16-22) et des interfaces d'appareils supplémentaires pour des appareils supplémentaires (40-44) raccordés au réseau avec des propriétés de consommation d'énergie ou d'apport d'énergie, les interfaces d'abonné bidirectionnelles (24a-24i) présentant chacune un raccordement pour le transfert d'énergie thermique par fluide, celui-ci pouvant être un transfert de froid ou un transfert de chaleur, le réseau étant un système de bus de chaleur et de froid avec des raccordements de bus pour le raccordement des interfaces d'abonné (24a-24i) avec les abonnés (16-22) et des interfaces d'appareils supplémentaires aux appareils supplémentaires (40-44), et un réservoir principal (30) avec une interface de réservoir principal bidirectionnelle avec le réseau étant prévu, le réseau comportant des capteurs pour détecter des donnés d'énergie à toutes les interfaces et aux appareils raccordés ainsi que des interfaces de données pour transmettre les données d'énergie et une commande centrale (50) pour commander les interfaces bidirectionnelles et les appareils chez les abonnés (16-22) étant prévue,
**caractérisé en ce**
**que** diverses sources d'énergie externes (32-38) sont directement raccordées au réservoir principal (30)
et
**que** la commande centrale (50) est aussi prévue pour commander les interfaces bidirectionnelles au réservoir principal (30).

2. Réseau d'approvisionnement (10) selon la revendication 1, **caractérisé en ce que** le réseau est conçu pour une température de service du fluide comprise entre-10 °C et +10 °C.

3. Réseau d'approvisionnement (10) selon la revendication 2, **caractérisé en ce que** la commande centrale est conçue pour pouvoir commuter entre différents niveaux de température.

4. Réseau d'approvisionnement (10) selon la revendication 1 ou 2, **caractérisé en ce que** les interfaces d'abonné (24a-24i) sont intégrées dans les bâtiments des abonnés (16-22), le réseau conduisant aux bâtiments.

5. Réseau d'approvisionnement (10) selon la revendication 1 ou 2, **caractérisé en ce que** les interfaces d'abonné (24a-24i) sont intégrées dans le réseau, des lignes conduisant des interfaces d'abonné (24a-24i) aux bâtiments des abonnés (16-22).

6. Réseau d'approvisionnement (10) selon l'une des revendications 1 à 5, **caractérisé en ce que** les interfaces d'abonné (24a-24i), respectivement les raccordements aux abonnés (16-22) et aux appareils raccordés sont réalisés de manière normalisée, de préférence uniforme.

7. Réseau d'approvisionnement (10) selon l'une des revendications 1 à 6, **caractérisé en ce que** les lignes, les interfaces auxquelles les différents appareils chez les abonnés (16-22) sont à raccorder, sont réalisées de manière uniforme, normalisée, de préférence identique.

8. Réseau d'approvisionnement (10) selon la revendication 1, **caractérisé en ce que** les appareils raccordés au réseau chez les abonnés (16-22) comprennent une installation de réfrigération et/ou une pompe à chaleur et/ou un capteur solaire thermique de toit et/un capteur hybride.

9. Réseau d'approvisionnement (10) selon la revendication 1, **caractérisé en ce que** le réservoir principal (30) est un réservoir principal (30) glaçable, qui est rempli d'un milieu pouvant se transformer en glace, en particulier d'eau.

10. Réseau d'approvisionnement (10) selon la revendication 1 ou 9, **caractérisé en ce que** le réservoir principal (30) présente des interfaces de réservoir principal pour le raccordement direct à une pompe à chaleur (31) et/ou un canal de récupération de chaleur (32) et/ou une unité de cogénération de chaleur et d'électricité (34) et/ou un dispositif de pyrolyse (36) et/ou un absorbeur solaire à air et de chaleur du sol (38) et/ou une cartouche chauffante (39).

11. Réseau d'approvisionnement (10) selon la revendication 10, **caractérisé en ce que** les interfaces de réservoir principal directes au réservoir principal (30) sont des raccordements de puissance qui permettent de chauffer rapidement le réservoir principal (30) en cas de besoin.

12. Réseau d'approvisionnement (10) selon la revendication 1, **caractérisé en ce que** le réseau présente un couplage en parallèle des interfaces d'abonné (24a-24i) avec les abonnés (16-22) et des interfaces d'appareils supplémentaires avec les appareils supplémentaires (40-44).

13. Réseau d'approvisionnement (10) selon la revendication 1, **caractérisé en ce que** les appareils supplémentaires (40-44) raccordés au réseau présentent une centrale de cogénération décentralisée (40) et/ou une installation de réfrigération (42) et/ou une pompe à chaleur (44) et/ou une installation de courant solaire.

14. Réseau d'approvisionnement (10) selon la revendication 1 ou 13, **caractérisé en ce qu'**une installation d'échange de chaleur (46) pour tempérer le fluide dans le réseau est raccordée en plus au réseau.
